# EUROPÄISCHE PATENTSCHRIFT

(11) **EP 3 841 441 B1**
(45) Veröffentlichungstag und Bekanntmachung des Hinweises auf die Patenterteilung: **13.03.2024**
(21) Anmeldenummer: 19762291.3
(22) Anmeldetag: 09.08.2019
(51) Int. Cl.: G05B 19/418, B29C 45/76

(54) **VERFAHREN ZUR QUALITAETSKONTROLLE UND/ODER NACHVERFOLGUNG EINES IN EINEM PRODUKTIONSZYKLUS HERGESTELLTEN SPRITZGIESSTEILS SOWIE KUNSTSTOFFINDUSTRIEANLAGE HIERFUER**
METHOD FOR THE QUALITY CONTROL AND/OR TRACKING OF AN INJECTION MOLDED PART PRODUCED IN A PRODUCTION CYCLE, AND PLASTIC INDUSTRIAL FACILITY FOR THIS PURPOSE
PROCÉDÉ DE CONTRÔLE DE QUALITÉ ET/OU DE SUIVI D'UNE PIÈCE MOULÉE PAR INJECTION FABRIQUÉE DANS UN CYCLE DE PRODUCTION ET INSTALLATION DE L'INDUSTRIE PLASTIQUE ASSOCIÉE

(30) Priorität: 21.08.2018 AT 507072018
(43) Veröffentlichungstag der Anmeldung: 30.06.2021
(73) Patentinhaber: Wittmann Technology GmbH, 1220 Wien (AT)
(72) Erfinder: RELLA, Johan, A-2671 Payerbach (AT)
(74) Vertreter: Felfernig, Oliver
(86) Internationale Anmeldenummer: PCT/AT2019/060255
(87) Internationale Veröffentlichungsnummer: WO 2020/037342

(56) Entgegenhaltungen:
- EP-A1- 0 750 914
- EP-A1- 2 045 770
- EP-B1- 0 750 914
- WO-A2-2007/141785
- AT-U1- 7 304
- JP-A- H0 822 494
- JP-A- 2017 033 525
- US-A- 5 461 570
- US-A1- 2017 153 616
- US-B1- 6 522 939

## Beschreibung

Die Erfindung betrifft ein Verfahren zur Qualitätskontrolle und/oder Nachverfolgung eines in einem Produktionszyklus hergestellten Spritzgießteils, wie es im Oberbegriff des Anspruches 1, beschrieben ist.

Es sind bereits Systeme bzw. Kunststoffindustrieanlagen bekannt, bei denen Daten über den gesamten Zeitraum von der Verarbeitungsmaschine und teilweise ebenso von in die Verarbeitungsmaschine integrierten oder angeschlossenen Geräten durch entsprechende Aktivierung aufgezeichnet werden. Anschließend können diese Daten durch Verbinden der Arbeitsanlage mit einem Laptop oder Computer auf diesen übertragen und gespeichert werden, worauf am Laptop oder Computer die Daten extern für eine Analyse zur Verfügung stehen.

Aus der US 6 522 939 B1 ist ein Computersystem einer Qualitätskontrolle für die Herstellung von Kontaktlinsen beschrieben. Dabei durchlaufen die Kontaktlinsen verschiedenste Stationen, die aufeinanderfolgend angeordnet sind. Das Computersystem enthält eine Überwachungsvorrichtung zum Empfangen eines extern erzeugten Fertigungsauftrags, der eine Chargennummer, das verwendete Material der Kontaktlinsen, einen Produkttyp und eine Menge der zu produzierenden Kontaktlinsen enthält, und koordiniert ferner den Fertigungsprozess an jeder der Vielzahl von Bearbeitungsstationen und verfolgt die Auftragsfertigung. Dabei werden die Produktionsdaten von einem oder mehreren Prozesssteuerungsgeräten abgerufen und verarbeitet, um sicherzustellen, dass die Produktionsparameter innerhalb vordefinierter Grenzen liegen. Nachteilig ist hierbei, dass nur das Erfassen von Parametern, insbesondere Qualitätsmerkmalen, an den verschiedensten Stationen für die Erzeugung des Schliffes, also der Bearbeitung des Rohlings, der Kontaktlinsen und übergeordnete Parameter erfasst und gespeichert werden, sodass keine vollständige Überwachung des Verarbeitungsprozesses möglich ist.

Ebenfalls ist aus der JP H08 22494 A die Erfassung von mehreren Gerätedaten zu einem Qualitätsbeitrag beschrieben, die in einer Datenbank erfasst werden. Auch hier ist keine vollständige Qualitätsüberwachung gegeben.

Die WO 2007/141785 A2 beschreibt ein Regelungssystem, wo Parameter der Kunststoffverarbeitungsmaschine auf den Blender zurückgeführt werden, um das Dosierrezept zu optimieren, wie dies typisch für eine Extruderanwendung ist.

Aus der US 5 461 570 A ist eine Chargenverfolgung von Kontaktlinsen beschrieben, bei denen die Linsen fertig sind und diese eine Chargennummer bekommen, worauf diese auf weiteren Stationen weiterverarbeitet werden.

Weiter sind aus der EP 0 750 914 A1, der US 2017/153616 A1, der AT 7 304 U1 und der JP 2017 033525 A Systeme bzw. Verfahren für zählbare Werkstücke/Produkte bekannt, für die ein Qualitätsbeitrag durch Erfassen der auftretenden Sensordaten, Maschineneinstellung, usw. erstellt wird.

Es sind aber auch Anlagen bekannt, bei denen zumindest die Verarbeitungsmaschine und teilweise ebenso in die Verarbeitungsmaschine integrierte oder angeschlossene Geräte über ein Netzwerk mit einem Datenbankserver verbunden sind und dort die Daten aufgezeichnet werden. Nachteilig ist hierbei, dass es nicht einfach möglich ist, die gesammelten Qualitätsdaten einem bestimmten hergestellten Spritzgießteil eindeutig zuzuordnen. Hierzu müssten mit hohem Aufwand von jedem Gerät die Daten ausgewertet und entsprechend des Prozessablaufes gereiht und zugeordnet werden, wobei der Herstellungszeitpunkt oftmals Tage, Wochen, Monate oder Jahre zurückliegen kann. Dabei ist oftmals nur bedingt die Zuordnung zu einem Spritzgießteil möglich, da die zeitliche Abfolge mit den Verzögerungen in der Prozesskette nur sehr bedingt oder überhaupt nicht aus den Daten hervorgeht.

Aufgabe der Erfindung ist es daher ein Verfahren zur Qualitätskontrolle und/oder Nachverfolgung eines in einem Produktionszyklus hergestellten Spritzgießteils der eingangs genannten Art zu schaffen, mit der einerseits die zuvor beschriebenen Nachteile vermieden werden und andererseits die eindeutige Zuordnung der Daten zu einem Produkt, insbesondere Spritzgießteil, zu ermöglichen.

Die Aufgabe wird durch die Erfindung gelöst.

Das erfindungsgemäße Verfahren ist dadurch gekennzeichnet, dass jedem einzelnen Spritzgiessteil (3) oder einer bestimmten Anzahl, insbesondere einer Charge (65), von Spritzgießteilen (3) ein Qualitätsbeitrag (33) zugewiesen wird, der sich aus mehreren Qualitätsbeiträgen (33a bis 33L) vom Beginn der ersten Granulatförderung bis zum fertigen Produkt bzw. Spritzgiessteil zusammensetzt, indem jedes Gerät (31) oder Station (31) in der Produktionskette seinen eigenen Qualitätsbeitrag (33a bis 33L), der aus einem Gerätebeitrag (32) und/oder Materialbeitrag (50) besteht, ermittelt bzw. erzeugt und um den oder die übermittelten Qualitätsbeiträge (33a bis 33L) der jeweiligen Vorgänger-Geräte (31) bzw. Vorgänger-Stationen (31) erweitert und diesen als neuen Qualitätsbeitrag (33a bis 33L) an das Nachfolge-Gerät (31) oder Nachfolge-Station (31) weiterleitet. Vorteilhaft ist hierbei, dass für jedes erzeugte Produkt, insbesondere Spritzgießteile, ein eigener Qualitätsbeitrag erzeugt wird, wobei die Beiträge, beispielsweise in Form einer Datei oder einer Datenbank auf einem Speichermedium abgelegt werden. Hierbei ist es möglich, dass dabei ein bestimmtes Gerät aus der Produktionslinie, welches vorzugsweise ausreichend Speichermedium aufweist, ausgewählt wird, d.h., dass bei der Installation der Anlage festgelegt wird, welches Gerät für die Speicherung der Qualitätsbeiträge zuständig ist. Es ist jedoch auch möglich, dass ein unabhängiges Gerät bzw. Sammelstation, insbesondere eine Hardware und/oder Software, hierfür eingesetzt wird, das mit den einzelnen Geräten der Kunststoffindustrieanlage verbunden ist und das deren Gerätebeiträge bzw. Materialbeiträge abfragt und daraus die Qualitätsbeiträge erstellt.

Es ist damit erstmals möglich, dass die Qualität aus den Herstellungszeiten vieler beteiligter Geräte ermittelt und zusammengesetzt werden kann, und dass man den Ablauf, welche Geräte der Reihe nach beteiligt waren und zu welchen Zeiten auswerten und anzeigen kann. Zu welcher Zeit, welche Geräte mit welchen Geräte- oder Materialbeiträgen in der Produktionskette für ein bestimmtes Teil beteiligt waren, ist beim Stand der Technik, bei dem alle Daten aller Geräte ständig und unabhängig voneinander aufgezeichnet werden, nur im Nachhinein und damit nicht oder nur mehr sehr schwer und/oder sehr ungenau rekonstruierbar.

Alternativ zur Erstellung eines Qualitätsbeitrages für jedes erstellte Produkt bzw. Spritzgießteil, ist es auch möglich, dass eine Einstellung vorgenommen werden kann, die für mehrere Produkte, insbesondere mit einer Identifikationsnummer versehen, gültig ist. Unter Materialcharge wird dabei verstanden, dass eine bestimmte zur Verfügung gestellte Menge an Material, insbesondere Kunststoffgranulat, verarbeitet wird, sodass alle mit dieser Materialcharge hergestellten Produkte in den Qualitätsbeitrag für diese Materialcharge fallen. Hierbei wird vorzugsweise auch die Menge, Zeitraum und/oder Herstellungsnummer der hergestellten erzeugten Produkte bzw. Spritzgießteile in dem Qualitätsbeitrag hinterlegt, um eine Zuordnung eines Spritzgießteils bzw. einer Herstellungsnummer zum Qualitätsbeitrag zu finden. Dabei ist es auch möglich, dass mehrere Qualitätsbeiträge zu einem neuen Qualitätsbeitrag zusammengefasst werden. Dies passiert quasi laufend in den einzelnen Geräten, wobei dies auch am Ende der Kette von Geräten, beispielsweise "einer Kiste" passieren kann.

Der Qualitätsbeitrag wird dabei durch Aneinanderreihen der einzelnen Gerätebeiträge und/oder Materialbeiträge der Geräte im Produktionszyklus von der Entnahme des Granulats aus einem Vorratsspeicher, der Förderung, Trocknung und etwaigen Dosierung des Materials mit anderen Materialien bis zum Erzeugen des Spritzgießteils und der anschließenden Entnahme des erzeugten Spritzgießteils aus der Verarbeitungsmaschine von einem Roboter und einer eventuellen nachfolgenden Qualitätskontrolle über ein Kamerasystem zusammengestellt, sodass eine lückenlose Nachverfolgung aller relevanten Parameter, die zur Erzeugung des Produktes maßgeblich waren, möglich ist.

Vorzugsweise beinhaltet der Qualitätsbeitrag sämtliche für Produktqualität und Rückverfolgbarkeit wesentlichen Daten, insbesondere den Gerätebeitrag und den Materialbeitrag, wobei es möglich ist, dass der Materialbeitrag, der für die zur Verfügungstellung und Förderung des Materials, insbesondere Granulats, unabhängig gespeichert wird, da hier oftmals manuelle Einstellungen bzw. Anpassungen vorgenommen werden. Im Gerätebeitrag sind sämtliche wichtige Parameter, insbesondere Ist-Werte und/oder Gut-Schlecht-Einstufung, bei der ein Abgleich des Ist-Wertes innerhalb eines Sollwerttoleranzbereiches liegt, enthalten. Es kann daher gesagt werden, dass es von Vorteil ist, dass vollautomatisch während des Produktionsablaufs zum Erzeugen des Spritzgießteils parallel die Beiträge für die Qualität erzeugt bzw. geschaffen werden. Somit ist praktisch mit dem Herstellungsende des Spritzgießteils auch der Qualitätsbeitrag für dieses Spritzgießteil fertiggestellt und kann somit archiviert werden. Vorteilhaft ist dabei, wenn diese in eine Datenbank integriert werden, um eine einfachere Auswertung zu einem späteren Zeitpunkt vornehmen zu können.

Von Vorteil sind die Maßnahmen, bei denen sich ein Qualitätsbeitrag in einem Gerät oder Station aus den Qualitätsbeiträgen der Vorgänger-Geräten oder Vorgänger-Stationen und seinem eigenen Gerätebeitrag und/oder Materialbeitrag zusammensetzt. Dadurch wird erreicht, dass eine automatische Vervollständigung des Qualitätsbeitrages mit den wichtigsten Daten der Geräte bzw. Stationen erfolgt, sodass am Ende zumindest ein Qualitätsbeitrag vorhanden ist.

Es sind auch die Maßnahmen von Vorteil, bei denen der Gerätebeitrag eines Gerätes durch speziell definierte Daten dieses Gerätes und vorzugsweise mit einem Zeitstempel gebildet wird. Dadurch können auf einfache Art und Weise für unterschiedliche Spritzgießteile, die für den geradezu erzeugenden Spritzgießteil wesentlichen Daten ausgewählt und jederzeit umgestellt werden. Auch ist es möglich, dass für gleiche Geräte im Arbeitsprozess unterschiedliche Daten ausgewählt werden, die in den Qualitätsbeiträgen gespeichert werden.

Vorteilhaft ist eine Ausbildung, bei der der Materialbeitrag durch speziell definierte Daten zum Material, insbesondere die geschätzte oder gemessene Menge des vom jeweiligen Gerät oder der jeweiligen Station geförderten und/oder verarbeiteten Materials, gebildet wird. Dadurch ergibt sich als Vorteil, dass jegliche Art von Verzögerung in der Zuführung und Verarbeitung des Materials, insbesondere prozessbedingte Verweilzeiten, Trocknungszeiten des Materials, neu zusammengesetzte Materialchargen als Folge von Mischvorgängen, unvermeidliche Materialvorlagen bei der Förderung zu den Verarbeitungsmaschinen, etc. zeitlich korrekt in die Qualitätsbeiträge aufgenommen werden und damit eine eindeutige Zuordnung und Qualitätsbestimmung möglich ist.

Von Vorteil sind die Maßnahmen, bei denen der Qualitätsbeitrag von vorzugsweise allen Geräten oder Stationen zur Erzeugung des Spritzgießteils in einen zeitlichen Zusammenhang gestellt wird. Dadurch wird selbstständig von den Geräten eine ständige Zunahme der Daten im Qualitätsbeitrag erreicht, ohne dass manuell eingegriffen werden muss.

Es sind die Maßnahmen von Vorteil, bei denen bei der Erstellung des zeitlichen Zusammenhangs im Qualitätsbeitrag die Verzögerungszeiten zur Aufbereitung oder Verarbeitung des Materials oder der Materialbeiträge in den einzelnen Geräten berücksichtigt werden, wobei die Verzögerungszeiten vorzugsweise von den Geräten selbst ermittelt werden, alternativ durch einen Testlauf oder manuell eingestellt und hinterlegt werden. Dadurch wird erreicht, dass die Daten zum entsprechenden Zeitpunkt verwendet werden, sodass ein wesentlich genauerer Qualitätsbeitrag erstellt wird.

Vorteilhaft ist bei den Maßnahmen, dass für die Materialversorgung das aus einem Vorratsspeicher bzw. Silo oder einem Dosiergerät geförderte Material in Materialbeiträgen, vorzugsweise in der Größe des Fördervolumens des verwendeten Fördergerätes, unterteilt wird, und dass sich die Qualitätsbeiträge auf solche Materialbeiträge beziehen. Speziell in der Materialversorgung ist es nicht möglich, dass die geförderte Menge an Material, insbesondere Granulat, immer exakt gemessen werden kann. Hier ist es beispielsweise von Vorteil, wenn eine größere Menge an Material über eine definierte Zeitdauer aufgeteilt wird. Das Erfassen einer größeren Menge ist einfach möglich, sodass das tatsächlich verbrauchte Material auf in dieser Zeitdauer produzierte Spritzgießteile aufgeteilt wird.

Von Vorteil sind auch die Maßnahmen, bei denen die Materialbeiträge gerätetypbezogen in Tabellen in einer oder mehrerer verteilter Datenbanken/Listen gespeichert wird und über IDs (Identifikationscodes) in Beziehung gesetzt wird. Damit wird vor allem erreicht, dass die Qualitätsbeiträge nicht von Gerät zu Gerät weitergegeben werden müssen, sondern nur eine ID auf diese Beiträge weitergeben wird. Die durch das Gerät hinzukommenden Qualitätsbeiträge werden unter einer neuen ID gespeichert, wobei die neue ID auch die vorhergehende ID referenziert. Damit kann der Speicherplatz der embedded Geräte geringgehalten werden.

Vorteilhaft sind auch die Maßnahmen, bei denen die Materialbeiträge je nach Verarbeitungsprozess in weitere Materialbeiträge aufgespalten werden oder mehrere Materialbeiträge unter einem neuen Materialbeitrag zusammengefasst werden. Dadurch wird erreicht, dass wiederum der Speicherplatz geringgehalten werden kann bzw. die Datenweiterleitung durch das geringe Datenvolumen sehr rasch und verzögerungsfrei erfolgt. Es sind aber auch die Maßnahmen von Vorteil, bei denen die Qualitätsbeiträge durch jedes an der Verarbeitung der Materialbeiträge beteiligte Gerät weiter ergänzt werden. Dadurch wird, step by step" von jedem Gerät in diesem Produktionszyklus der Qualitätsbeitrag mit Daten vergrößert bzw. ergänzt. Hierbei ist es möglich, dass die einzelnen Geräte bzw. Stationen für nur einen Produktionszyklus oder aber auch für mehrere parallel laufende Produktionszyklen zuständig sind.

Bei den Maßnahmen, bei denen eine in ein Fördergerät geförderte geschätzte Fördermenge des Materials oder Materialbeitrages beim Durchlauf von Dosiereinheiten (beispielsweise einem Blender oder aber auch bei einer Spritzgießmaschine) nachträglich korrigiert werden kann, indem eine oder mehrere verteilte Datenbanken/Listen mit hinterlegten Fördermengen oder durch einen Regelungsalgorithmus angepasst wird, ist von Vorteil, dass dadurch bei Abweichungen im Prozess jederzeit eine Korrektur vorgenommen wird, sodass die tatsächlich verarbeitete Materialmenge beispielsweise am Ende einer Schicht oder einer anderen definierten Zeiteinheit mit der hinterlegen Fördermenge übereinstimmt.

Auch sind die Maßnahmen von Vorteil, bei denen die geschätzten und in den Materialbeiträgen hinterlegten Fördermengen bzw. Förderparameter derart berechnet werden, dass diese die an jenen Geräten mit eindeutig messbaren Fördermengen, wie beispielsweise der Spritzgießmaschine und dem Blender, usw., gemessenen Fördermengen ergeben. Dadurch kann eine automatische Anpassung vorgenommen werden, indem an jenen Geräten mit exakter Mengenmessung diese ermittelt wird und anschließend zu anderen Geräten rückgerechnet wird. Bei Bedarf können Mengen auch manuell korrigiert werden, insbesondere wenn unvorhergesehene Verlustmengen (z.B. die Einspritzeinheit der Spritzgießmaschine wird ausgespritzt, Behälter wird gereinigt) auftreten.

Vorteilhaft sind die Maßnahmen, bei denen die Daten des Gerätebeitrags von dem Roboter vorzugsweise aus der Kisten-ID und/oder aus der Position in der die Spritzgießteile abgelegt bzw. gestapelt werden und/oder aus dem Zeitpunkt, zu dem das Spritzgießteil vom Transportband genommen wird, bestehen. Dadurch können sämtliche Daten, auch jene die nach der Herstellung des Spritzgießteils erfolgen, speziell jene für die Rückverfolgbarkeit des Teils oder der Verpackungseinheit, wie beispielsweise, das Labeln, das Verpacken, das Entnehmen vom Transportband mitdokumentiert werden.

Es sind auch die Maßnahmen von Vorteil, bei denen ein Förderband, beispielsweise bei Verwendung als Kühlstrecke, mit seinen Verzögerungszeiten als Station/Gerät verarbeitet wird, sodass der kumulierte Qualitätsbeitrag auch für jenes Teil, das sich gerade am Ende des Förderbands befindet, zur Verfügung steht. Somit bleibt die Zuordnung der Qualitätsbeiträge zu einem bestimmten Kunststoffteil auch über Geräte mit speziellen verzögernden Abläufen erhalten.

Von Vorteil sind die Maßnahmen, bei denen von jedem Gerät bzw. Station die genaue Zeit der Verarbeitung des Materialbeitrages jedes beteiligten Prozesses erfasst und gespeichert wird. Dadurch wird erreicht, dass ein exakter zeitlicher Verlauf zu einem späteren Zeitpunkt rückverfolgt werden kann.

Die Erfindung wird an Hand von in den Zeichnungen dargestelltem Ausführungsbeispiel näher erläutert, wobei die Erfindung nicht auf die gezeigte Darstellung, insbesondere den Aufbau und die Zusammensetzung der Anlage, begrenzt ist.

Es zeigen:
- Fig. 1: ein Übersichtbild einer kunststoffverarbeitenden Industrieanlage in einer Arbeitszelle, in vereinfachter, schematischer Darstellung;
- Fig. 2: eine schematische Darstellung einer Kunststoffverarbeitungsanlage mit sämtlich darin benötigten Geräten, in vereinfachter, schematischer Darstellung;
- Fig. 3: eine schematische Darstellung eines weiteren Beispiels eines Aufbaus einer Kunststoffindustrieanlage, in vereinfachter, schematischer Darstellung;
- Fig. 4: ein weiteres Ausführungsbeispiel einer Kunststoffindustrieanlage, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

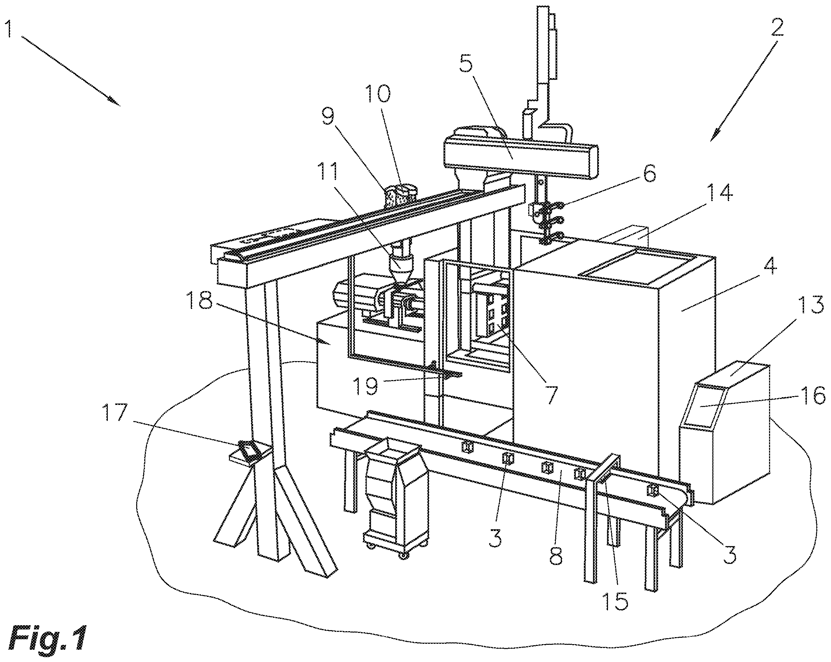

In Fig. 1 ist eine Detaildarstellung eines Aufbaus innerhalb der Kunststoffindustrieanlage 1, von einer Arbeitszelle 2 für Spritzgießanwendungen gezeigt, bei der die einzelnen Komponenten/Geräte zum Erzeugen eines oder mehrerer Produkte/Halbprodukte oder Spritzgießteile 3 in der Arbeitszelle 2 zusammen geschaltet sind. Als Verarbeitungsmaschine wird vorzugsweise eine Spritzgießmaschine 4, eingesetzt, der ein Roboter 5 bzw. Handhabungsautomat neben oder darüber zum Entnehmen des hergestellten Spritzgießteils 3 zugeordnet ist. Dabei wird das Spritzgießteil 3 von einer Entnahmevorrichtung 6, insbesondere einem Greifer ausgestattet mit Greifzangen und/oder Saugdüsen, aus einer sich öffnenden Spritzgießform 7 entnommen und auf eine Vorrichtung, insbesondere ein Transportband 8, abgelegt.

Beispielsweise ist es möglich, dass für die Herstellung eines Spritzgießteiles 3 Kunststoffgranulat 9 über ein Granulatfördergerät 10 und eventuell über ein Dosiergerät 11 oder aus einem Vorratslager der Verarbeitungsmaschine 4 zugeführt wird. Über ein Temperiergerät 13 und/oder Kühlgerät kann die Spritzgießform 7 durch Zuführung eines Temperiermediums auf Betriebstemperatur gehalten werden bzw. entsprechend geheizt oder gekühlt werden, sodass eine optimale Verarbeitung des Kunststoffgranulates 9, welches zum Einspritzen in die Spritzgießform 7 plastifiziert werden muss, ermöglicht wird.

Zusätzlich kann die Anlage eine Überwachungsvorrichtung 15, insbesondere ein Kamerasystem, aufweisen, um eine automatische Qualitätskontrolle des erzeugten Produktes 3 durchführen zu können. Ebenso sind sehr häufig vor- bzw. nachgeschaltete Automatisierungsanlagen 18 vorhanden, z.B. Angußabschneide-19, Zentrier-, Vereinzelungs-, Zuführstationen, Kisten-, Palettenstapelstationen, etc., die direkt in die Robotsteuerung bzw. Industrieanlage 1 eingebunden und von dieser über digitale oder analoge Signale oder andere Kommunikationsschnittstellen gesteuert werden. Die Erstellung der Ablauf- und Steuerlogik für den Roboter 5 bzw. Handhabungsautomat 5 und etwaige angeschlossene Automatisierungskomponenten 18 bzw. -anlagen erfolgt typischerweise im Teach-In-Verfahren. Ebenso kann die Programmierung der Ablauf- und Steuerlogik zuerst offline auf einem PC erfolgen. Die anlagenspezifischen Werte, z.B. die tatsächlichen Positionen der Achsen, werden dann wieder im Teach-In-Verfahren ergänzt.

Damit die einzelnen Geräte eingestellt bzw. programmiert werden können, weisen diese vorzugsweise eine Steuerelektronik (nicht dargestellt) auf, wobei die Einstellung bzw. Programmierung über an den Geräten angeordneten Displays 16 oder einer Robotsteuerung 17 eingegeben und angezeigt werden. Selbstverständlich ist es möglich, dass auch über eine externe Komponente, die über eine Schnittstelle mit den Geräten verbunden ist, die Programmierung bzw. Einstellung erfolgen kann. Der vollständigkeitshalber wird des Weiteren erwähnt, dass sämtliche Geräte mit entsprechenden Leitungen, insbesondere Spannungsversorgungen, Netzwerk- und Verbindungsleitungen, Flüssigkeitsversorgungsleitungen, Materialleitungen usw. verbunden sind, die in der gezeigten Darstellung der übersichtshalber nicht dargestellt wurden.

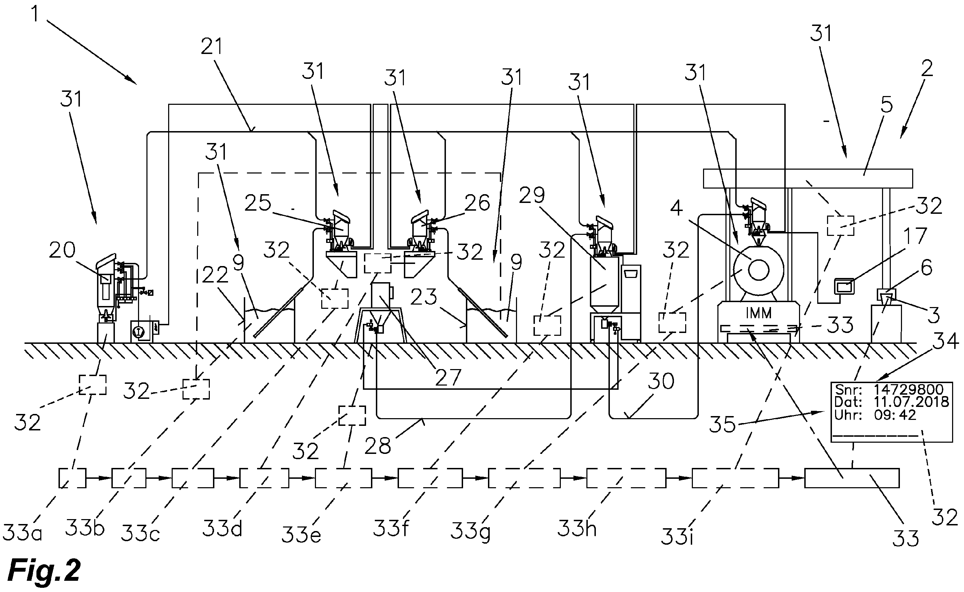

In Fig. 2 ist ein Schaltschema eines Aufbaus der Kunststoffindustrieanlage 1 mit sämtlichen wesentlichen Versorgungsleitungen und einer Kunststoffverarbeitungsmaschine, insbesondere der Spritzgießmaschine 4, gezeigt.

Die Materialversorgung erfolgt bei dem dargestellten Beispiel über ein Vakuumgerät 20, insbesondere eine Vakuumpumpe, die einen Unterdruck in Vakuumleitung 21 aufbaut, sodass das Ausgangsmaterial, insbesondere das Granulat 9, aus zwei Vorratsspeichern 22, 23 entnommen werden kann. Hierzu wird vom Vakuumgerät 20 ein Vakuum in der Materialleitung 21 angelegt, die beispielsweise mit jeweils einer Sauglanze 24 verbunden ist, über die das Granulat 9 aus dem Vorratsspeicher 22,23 angesaugt und einem Dosiergeräte 27 zugeführt wird.

Mit den Fördergeräten 25,26 wird zuerst das Granulat 9 von den beiden Vorratsspeichern 22, 23 in die Versorgungsbehälter des Dosiergerätes 27 gefördert, um anschließend im richtigen Mischungsverhältnis zusammen gemischt zu werden, von dem aus anschließend über eine Material-Versorgungsleitung 28 das zusammengemischte Granulat 9 einer Trocknungsstation, insbesondere einem Mobiltrockner 29, zugeführt wird, wo das Granulat 9 mit Trockenluft durchströmt wird und sämtliche Feuchtigkeit entzogen wird, sodass das Granulat 9 für den Spritzgießprozess aufbereitet wird. Anschließend wird über eine weitere Material-Versorgungsleitung 30 und ein weiteres Fördergerät das getrocknete Granulat 9 der Kunststoffverarbeitungsmaschine, insbesondere der Spritzgießmaschine 4, zugeführt und von dieser verarbeitet. Dabei ist die Spritzgießmaschine, wie in Fig. 1 gezeigt, beispielsweise in der Arbeitszelle 2 organisiert, in der unterschiedlichste Geräte, wie beispielsweise ein Durchflussregler 14, ein Temperiergerät 13, ein Roboter 5, ein Fördergerät 19, eine Teach-Box bzw. Robotsteuerung 17, usw., zum Erzeugen des Spritzgießteils 3 in bester Qualität zusammen geschaltet sind, wobei auf deren detaillierte Funktion der einzelnen Geräte nicht näher eingegangen wird, da diese bereits aus dem Stand der Technik bekannt sind.

Wie aus dem Schaltplan ersichtlich, wird zum Erzeugen eines fertigen Spritzgießteils 3 eine große Anzahl an Geräten bzw. Stationen 31, beginnend mit der Materialförderung bis zum Ablegen bzw. Verpacken des fertigen Produktes, durchlaufen, wobei in jeder Station 31 für die Bestimmung der Qualität des Produktes deren Ist-Werte, Sollwerte, usw. wesentlich sind, um Rückschlüsse auf die Qualität des Produktes machen zu können. Beim derzeitigen Stand der Technik ist es nicht möglich, dass eine Qualitätszuordnung eines Spritzgießteils 3 über die gesamte Produktionskette auf einfach Art und Weise erfasst, ausgewertet und gespeichert werden kann.

Erfindungsgemäß ist vorgesehen, dass während eines Produktionszyklus bzw. Produktionsablaufes, also von der Entnahme des Granulats 9 aus dem Vorratsspeicher 22,23 bis zum Erzeugen des Spritzgießteils 3 und der anschließenden Entnahme und Ablage des erzeugten Spritzgießteils 3 aus der Verarbeitungsmaschine von dem Roboter 5 und einer eventuellen nachfolgenden Qualitätskontrolle über ein Kamerasystem, von jedem beteiligten Gerät 31 bzw. Station 31 ein für dieses Gerät 31 oder Station 31 abgestimmter Gerätebeitrag 32 zu einem gemeinsamen Qualitätsbeitrag 33 (33a-33i) zusammen gefasst werden.

Wie schematisch mit strichlierten Linien dargestellt, wird der erzeugte Qualitätsbeitrag 33 vorzugsweise in der größten Geräteeinheit, insbesondere der Spritzgießmaschine 4, dem Roboter 5 oder einem eigenen CoQ-Gerät gespeichert, wenn ein Spritzgießteil 3 fertig hergestellt ist und keinerlei weiteren maschinellen Arbeitsschritte mehr auszuführen sind, d.h., dass von jedem Gerät 31 bzw. jeder Station 31 von Beginn der Produktion bis zum fertigen Endprodukt, also dem Spritzgießteil 3, sein definierter Gerätebeitrag 32 zum Produktionszeitpunkt erfasst und festgehalten wird, worauf dieser Gerätebeitrag 32 vom Gerät 31 bzw. der Station selbst in den Qualitätsbeitrag 33a bis 33i (33) integriert wird und somit der Qualitätsbeitrag 33a bis 33i bis zur letzten Ergänzung 33 immer erweitert wird. Am Ende wird der Qualitätsbeitrag 33 mit der Fabrikationsnummer bzw. Seriennummer 34 des Spritzgießteils 3 samt dazugehörigem Datum und Uhrzeit 35 und weiterer definierter Daten abgeschlossen und abgespeichert. Dabei können eine Vielzahl unterschiedlicher Qualitätsbeiträge 33 auf dem Gerät 31 bzw. der Station 31 gespeichert sein.

Bei dem schematisch gezeigten Ablauf zur Bildung des Qualitätsbeitrags 33 aus lauter einzelnen zusammen geführten Gerätebeiträgen 32 ist es auch möglich (wie dies für das Granulat 9 in den beiden Vorratsspeichern 22,23 gezeigt wird), dass bei der Anlieferung des Materials bzw. Granulats 9 und der Befüllung in den Vorratsspeicher 22,23 eine Probe entnommen oder eine Chargennummer, analysiert und deren Gerätebeitrag 32 festgelegt und eingegeben wird, sodass auch für das Material bzw. Granulat 9 ein entsprechender Gerätebeitrag 32 vorhanden ist, der manuell oder halbmanuell aber wenn möglich, auch automatisch erstellt und eingegeben werden kann. Da bei dem gezeigten Ausführungsbeispiel zwei getrennte Vorratsspeicher 22, 23 eingesetzt werden, wurde diese beiden zu einem einzigen Gerätebeitrag 32 zusammengefasst, wobei die Daten für die beiden Granulate 9 in den beiden Vorratsspeichern 22, 23 enthalten sind. Selbstverständlich ist es möglich, dass für jeden Vorratsspeicher 22, 23 ein eigener selbstständiger Gerätebeitrag 32 erstellt werden kann. Auch ist es möglich, dass mehrere einzelne Geräte 32 zu einer Gerätegruppe zusammengefasst werden und diese entsprechende definierte Daten übersenden, sodass zu dieser Gerätegruppe von einem Gerät 31 bzw. Station ein Gerätebeitrag 32 erstellt werden kann. Dieses Gerät 31 bzw. Station 31 ist vorzugsweise dann auch für die Bearbeitung und Ergänzung des Qualitätsbeitrages 33a - 33i (33) zuständig, bevor das nächste Gerät 31 bzw. Station 31 den Qualitätsbeitrag 33 übernimmt.

Grundsätzlich ist es möglich, dass der Qualitätsbeitrag 33 immer nacheinander bearbeitet wird, d.h., dass das erste Gerät 31, in dem Ausführungsbeispiel die Vakuumpumpe 20, mit der Erstellung des Gerätebeitrags 32 beginnt und diesen in einen Qualitätsbeitrag 33a umändert und speichert, worauf das nächste Gerät 31, nämlich die Vorratsspeicher 22,23, den Gerätebeitrag 32 für die Granulatproben, verwendet und zum Qualitätsbeitrag 33b hinzufügt und speichert. Als nächstes erstellen die beiden Fördergeräte 25, 26 auf der Dosiereinheit ihren Gerätebeitrag 32 und fügen diesen wiederum den bereits aus Vakuumpumpe 20 und Materialprobe bestehenden Qualitätsbeitrag 33a und 33b und ergänzen diesen mit ihren Gerätebeiträgen 32 zum Qualitätsbeitrag 33c und speichern diesen. Diese serielle Erstellung des Qualitätsbeitrages 33 (33a - 33i) durch ständiges Hinzufügen von definierten Gerätebeiträgen 32 der einzelnen Geräte 31 bzw. Stationen 31 wird solange fortgeführt, bis der allerletzte Gerätebeitrag 33, dies ist meist jener Gerätebeitrag 32 worin die Seriennummer 34 und weitere Informationen zum Spritzgießteil 3, insbesondere das Datum und die Uhrzeit 35 enthalten sind, hinzugefügt wurde, worauf anschließend eine Speicherung des Qualitätsbeitrages 33 in einem Gerät 31 erfolgt oder dieser extern gespeichert wird.

Somit ist es erstmals möglich, dass nach Produktionsabschluss eines Spritzgießteils 3 eine Rückverfolgung sämtlicher beteiligter Geräte 31 bzw. Stationen 31 und deren Parametern vorgenommen werden kann. Hierzu ist es lediglich notwendig, dass die Seriennummer 34 oder Identifikationsnummer des Spritzgießteils 3 oder die Identifikationsnummer der Kiste oder des Trays bekannt ist, worauf der entsprechend dazugehörige Qualitätsbeitrag 33 automatisch selektiert werden kann. Vorzugsweise sind die Qualitätsbeiträge 33 dabei derart gespeichert, dass jederzeit die Seriennummer 34 und/oder Produktionsdatum 35 beispielsweise als Speichername enthalten sind, sodass auch auf einfache und schnelle Art und Weise manuell der entsprechende Qualitätsbeitrag 33 zu einem Spritzgießteil 3 mit einer bestimmten Seriennummer 34 herausgesucht werden kann.

Wie bereits zuvor erwähnt, werden durch ein derartiges Qualitätssystem eine Vielzahl von Vorteilen erzielt. Auch sind in der Beschreibung spezielle Abläufe bzw. Verfahrensschritte geoffenbart, die die einzelnen Geräte 31 bzw. Stationen 31 vollziehen bzw. derart ausgebildet sind, um diese Verfahren bzw. Abläufe durchführen zu können.

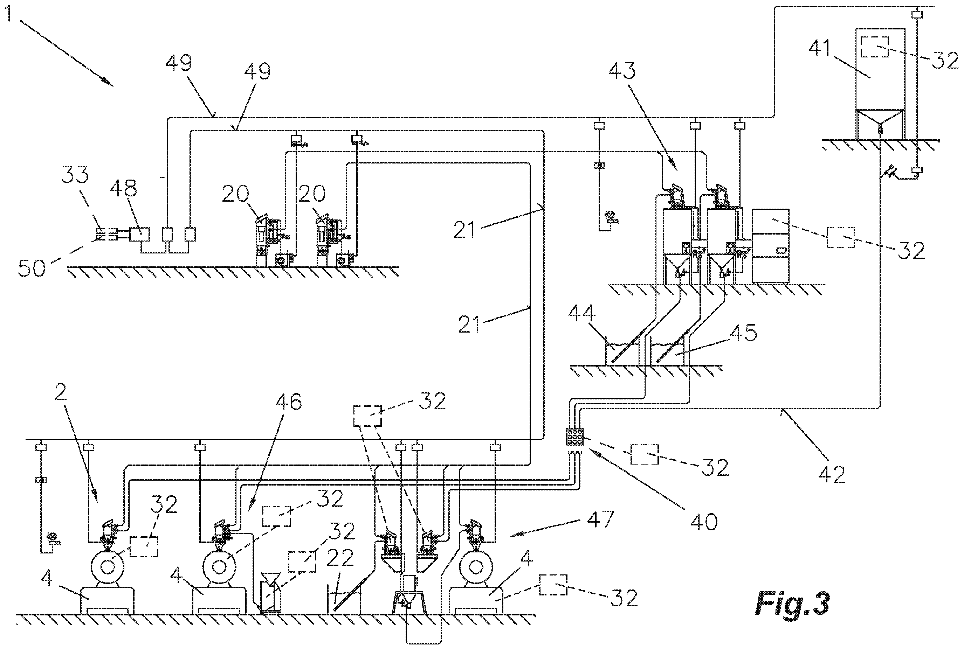

In Fig. 3 ist ein weiterer Aufbau einer Kunststoffindustrieanlage 1 gezeigt, bei der eine Zentralversorgung mit einem Materialverteiler 40 für das Material, insbesondere Granulats 9, zum Einsatz kommt. Hierbei ist ein außen bzw. im freien angeordneter Silo 41 für das Granulat 9 angeordnet, der über eine Versorgungsleitung 42 mit dem Materialverteiler 40 verbunden ist. Vom Materialverteiler 40 kann dabei das Granulat 9 aus dem Silo 41 direkt zu den Spritzgießmaschinen 4 gefördert werden. Das Granulat in den Vorratsspeichern 22, 23 wird zuerst zu einer Trocknungsstation 43 gefördert. In der Trocknungsstation 43 wird das Granulat 9 aus den Vorratsspeichern 22, 23 durch Erhitzung beispielsweise mit Trockenluft getrocknet, wonach das Granulat 9 wieder über den Materialverteiler 40 zu den weiteren Geräten 31 bzw. Stationen 31 befördert wird. Der Transport des Granulats erfolgt wiederum über ein Vakuumsystem, wozu zwei Vakuumgeräte 20 in der Anlage installiert sind.

Über den Materialverteiler 40 werden bei dem gezeigten Ausführungsbeispiel nunmehr mehrere Kunststoffverarbeitungsgeräte, insbesondere Spritzgießmaschinen 4, die beispielsweise jeweils in eigenen Arbeitszellen 2, 46 und 47 organisiert sind. Dabei können die einzelnen Arbeitszellen 2, 46, 47 unterschiedlich ausgebildet sein, wobei jede Arbeitszelle 2, 46, 47 ein eigenes Spritzgießteil 3 mit den notwendigen Geräten 31 bzw. Stationen 31, wie schon zuvor erwähnt, erzeugt. Wie schon zuvor beschrieben, erstellt wiederum jedes an der Erzeugung des jeweilige Spritzgießteils 3 beteiligte Gerät oder Station den Gerätebeitrag 32 zum Produktionszeitpunkt und speichert diesen, d.h., dass wiederum jedes zum Einsatz kommende Gerät 31 bzw. Station oder eine Gerätegruppe mit mehreren Geräten 31 bzw. Stationen jeweils seinen Gerätebeitrag erstellt und zumindest kurzzeitig speichert.

Um nun jedoch den wesentlichen Qualitätsbeitrag 33 für ein entsprechendes Spritzgießteil 3 zu erstellen, kommt in diesem Ausführungsbeispiel eine Sammelstation 48 bzw. eine Hardware oder Software 48 mit der Bezeichnung Chain of Quality (CoQ) zum Einsatz. Dabei ist die Sammelstation 48 über Netzwerkleitungen 49 mit den einzelnen Geräte 31 bzw. Stationen 31 verbunden. Es wird erwähnt, dass die Sammelstation 48 in Form eines Computers, Tablets oder einer Steuerung ausgebildet sein kann und zum Abfragen der Gerätebeiträge 32 von den einzelnen Geräten 31 bzw. Stationen 31 ausgebildet ist, wobei die Sammelstation 48 die Gerätebeiträge 32 abfragt und in zeitliche Beziehung stellt, sodass daraus der Qualitätsbeitrag 33 erstellt wird.

Bei den gezeigten Ausführungsbeispielen der Fig. 1 bis 3 hat sich gezeigt, dass es von Vorteil ist, wenn die Verzögerungszeiten von den einzelnen Geräten 31 bzw. Stationen 31 in den Beiträgen zur Qualität, insbesondere dem Gerätebeitrag 32, dem Qualitätsbeitrag 33, berücksichtigt werden. Weiters hat sich als sehr wesentlich und schwierig zu lösende Aufgabe die Qualitätsbestimmung in der Materialförderung gezeigt. Hierzu wird das geförderte Material bzw. Granulat 9 in Materialbeiträge 50, wie schematisch in Fig. 3 bei der Sammelstelle 48 eingezeichnet, unterteilt und gespeichert, wobei dies vorzugsweise in einer Datenbank erfolgt, wobei der Materialbeitrag 50 durch speziell definierte Daten zum Material, insbesondere die geschätzte oder gemessene Menge des geförderten und/oder verarbeiteten Materials, gebildet wird. Dabei ist es auch möglich, dass jedes an der Materialförderung und/oder Materialverarbeitung beteiligte Gerät 31 die Materialbeiträge 50 ergänzt, d.h., dass wiederum jedes beteiligte Gerät 31 bzw. Station 31 seinen Beitrag für die Qualität dem Materialbeitrag 50, also der Förderung des Granulats 9, ergänzt, sodass am Ende eine Datei mit den kompletten zusammengeführten Daten zur Materialförderung erstellt wurde, der in den Qualitätsbeitrag 33 integriert werden kann. Man kann also sagen, dass bei dem beschriebenen Verfahren drei unterschiedliche Beiträge zur Qualität des Spritzgießteils 3, nämlich jedes Gerätes 31 sein Gerätebeitrag 32, eine Materialeinheit bzw. Materialbeitrag 50 für die Förderung des Materials bzw. Granulates 9 und der gesamte Qualitätsbeitrag 33 erzeugt und gespeichert wird. Dabei liegt die Qualität in der Behandlung des Materials, insbesondere muss man wissen, welches Material, wann wo ist und wie es behandelt wird. Daher erfolgt eine Unterteilung in Materialbeiträge (Fördermengen). Das Material, das zur gleichen Zeit weitergefördert wird, wird dann im nachfolgenden Gerät 31 als eine Einheit, also als Materialbeitrag 50 betrachtet. Diesem Materialbeitrag 50 wird durch die Materialbehandlung im Gerät 31 somit eine Qualität eingeprägt, die abgespeichert und im Qualitätsbeitrag 33 erfasst wird.

Es ist aber auch ein Vorgehen möglich, bei dem jedem Gerät 31 ein Eingangs-Identifikationscode (Eingangs-ID) für einen Qualitätseintrag eines Materialbeitrages 50 von der Sammelstation 48 (CoQ) übergeben und ein Ausgangs-Identifikationscode (Ausgangs-ID) für Materialbeiträge 50 mit vom Gerät 31 ergänzten Qualitätsdaten vom der Sammelstation 48 entgegengenommen wird. Somit kann der Fluss des Materials über diverse Stationen 31 bzw. Geräte 31 über die Identifikationscodes (IDs) abgebildet werden, wodurch eine einfache Rückverfolgung jederzeit möglich ist.

Dabei sollte es möglich sein, dass der Qualitätsbeitrag 33, der die Qualitätsinformation jeder involvierten Station 31 beinhaltet, getrennt für jeden erzeugten Spritzgießteil 3 abgefragt werden kann. Vorzugsweise kann dies auf der Sammelstation 48 (CoQ) oder auf einem Computer, Tablet oder einer Steuerung 17 auf den die Daten, insbesondere die Qualitätsbeiträge 33 übertragen wurden, erfolgen. Um ein rasches Auffinden zu ermöglichen, läuft hierzu auf der Sammelstation 48 oder einem Computer bzw. Tablet oder Steuerung 17 eine dafür programmierte Software, über die beispielsweise die Seriennummer 34 der Spritzgießteile 3, das Datum und Uhrzeit 35 des Herstellungszeitpunktes oder der Materialzusammensetzung, abgefragt und selektiert werden kann. Somit ist es möglich, zu einem späteren Zeitpunkt, der beispielsweise Monate oder Jahre später liegt, über die Software durch einfache Eingabe der Seriennummer des Spritzgießteils 3 die gesamte Herstellungskette bzw. Qualitätskette rück zu verfolgen, wodurch ev. Problemfälle überprüft und wenn erforderlich auch rückgeholt werden können, wenn Fehler in der Qualität des Produktionsverlaufes aufgefunden wurden.

Vorzugsweise werden die Daten oder nur bestimmte Daten für die Qualitätsbeiträge 33 und für die Materialbeiträge 50 in Datenbanken integriert, sodass, falls erforderlich, die Daten nachträglich korrigiert werden können. Speziell bei der Förderung von Material ist eine exakte Messung oftmals nicht möglich, sodass hierfür oft geschätzte Fördermenge beim Durchlauf von Dosiereinheiten (Blender, Spritzgießmaschinen 4) nachträglich korrigiert werden können. Um auf eine geschätzte Fördermenge beim Durchlauf von Dosiereinheiten (Blender, Spritzgießmaschine 4) zu kommen, erfolgt dies über einen Regelungsalgorithmus, der auch angepasst werden kann. Dieser Regelalgorithmus läuft vorzugsweise auf jenem Gerät 31, welches für die Speicherung des Qualitätsbeitrages 33 oder Materialbeitrages 50 zuständig ist, oder auf der Sammelstation 48. Als vorteilhaft hat sich gezeigt, wenn das zugrunde liegende Fördermodell durch die Daten vom tatsächlichen Materialverbrauch, gemessen an der Spritzgießmaschine 4 oder dem Blender, ergänzt wird, d.h. dass die geschätzten Förderparameter so angepasst werden, dass die geschätzten Fördermengen die an anderer Stelle (Blender, Spritzgießmaschine 4) eindeutig gemessenen Verarbeitungsmengen ergeben und übereinstimmen. Hierzu kann das System derart ausgelegt sein, dass durch ein Programm, insbesondere einen "machine-learning-Ansatz, erkannt wird, wenn Benutzereingriffe die Fördermengen beeinflussten und demnach nicht anzupassen sind.

Oftmals kommt es auch vor, dass das Ausspritzen von Kunststoff aus der Einspritzeinheit der Spritzgießmaschine 4 von CoQ, insbesondere der Sammelstation 48, dadurch erkannt wird, dass die Spritzgießform offensteht, sodass dieser Vorgang beim Sammeln der Daten für die Qualität bzw. den Qualitätsnachweis berücksichtigt wird. Grundsätzlich kann gesagt werden, dass mehrere derartige Kontrollmechanismen, die software- und/oder hardwaremäßig umgesetzt sein können, integriert sind, um möglichst vollautomatisch einen Qualitätsnachweis in Form eines Qualitätsbeitrags 33 für das Spritzgießteil 3 zu erhalten. Auch ist es möglich, dass das Schussgewicht und die Schüttdichte verwendet werden, um vom fertigen Bauteil, also dem Spritzgießteil, auf die verwendete Schüttgutmenge zu schließen oder dass das verwogene Gewicht im gravimetrischen Dosiergerät (Blender) und die Schüttdichte des Materials verwendet werden, um auf die tatsächliche Fördermenge zu schließen.

Die Kunststoffindustrieanlage, insbesondere die Sammelstation 48 (CoQ) kann dabei mit Stationen 31 bzw. Geräten 31 unterschiedlicher Hersteller verwendet werden, indem die Qualitätsdaten über OPC UA eingelesen werden und die dahinter liegenden Prozesse nach Maßgabe von der Sammelstation 48, insbesondere der CoQ, berücksichtigt werden. Weiters kann sich die Sammelstation 48 als Teilnehmer einer Arbeitszelle 2, 46,47 bei einer Arbeitszellensteuerung anmelden, wobei die Arbeitszellensteuerung mit sämtlichen Geräten 31 einer Arbeitszelle 2, 46,47 verbunden ist, wobei die Arbeitszellensteuerung einerseits die Kommunikation bzw. den Datenaustausch mit dem vorzugsweise betriebsinternen Netzwerk, insbesondere einem Intranet und/oder einem Internet, und andererseits mit den Geräten 31 bzw. Stationen 31 der Arbeitszelle (2, 46, 47) durchführt und direkte Kommunikation der Produktionsmittel (5) untereinander herstellt.

Dabei ist es möglich, dass die Sammelstation 48 (CoQ) als Software-Applikation, insbesondere als "Chain of Quality-Software" (CoQ) ausgeführt sein kann, die beispielsweise in der Arbeitszellensteuerung installiert ist und arbeitet. Hierbei ist in der CoQ-Software eine Möglichkeit vorgesehen, beispielsweise dass sie eine Website bietet, um administriert zu werden. Es ist auch vorgesehen, dass mehrere derartige CoQ-Software, insbesondere CoQ-Devices, installiert bzw. kaskadiert werden können und somit Qualitätsdaten mehrerer Arbeitszellen 2, 46,47 parallel eingelesen und weiter ergänzt werden können.

Auch können vom Entnahmeroboter 5, insbesondere vom Roboter 5, Qualitätsdaten zum fertigen Teil bzw. Spritzgießteil 3 an die CoQ-Software bzw. die Sammelstelle 46 bzw. an das Gerät 31 auf dem die CoQ-Software für die Qualitätsbeiträge 33 und/oder Materialbeiträge 50 läuft, gemeldet werden, d.h., dass die Qualitätsdaten aller im fertigen Teil 3 bzw. Spritzgießteil 3 enthaltenen Materialbeiträge 50 mit samt der vom Entnahmeroboter 5 ergänzten Qualitätsinformation von CoQ geliefert und abgefragt werden können. Hierbei können beispielsweise auch Daten vom Transportband 8, beispielsweise bei Verwendung als Kühlstrecke, mit seinen Verzögerungszeiten als Station/Gerät 31 von CoQ bzw. der Sammelstation 48 verarbeitet werden, sodass von CoQ die Qualität auch jenes Teils 3, das sich gerade am Ende des Transportbandes 8 befindet, geliefert werden kann.

Um eine nahtlose zeitliche Abfolge der Daten in den Beiträgen verarbeiten zu können, ist die genaue Zeit der Verarbeitung jedes beteiligten Prozesses notwendig, sodass diese mitgespeichert wird. Es ist auch möglich, dass automatisierte Daten softwaretechnisch vom CoQ, wie beispielsweise die Seriennummer 34 oder die Identifikationsnummer oder in Datenbanken hinterlegte Daten, wie geschätzte Fördermenge, entnommen und dem Qualitätsbeitrag 33 und/oder Materialbeitrag 50 ergänzt werden.

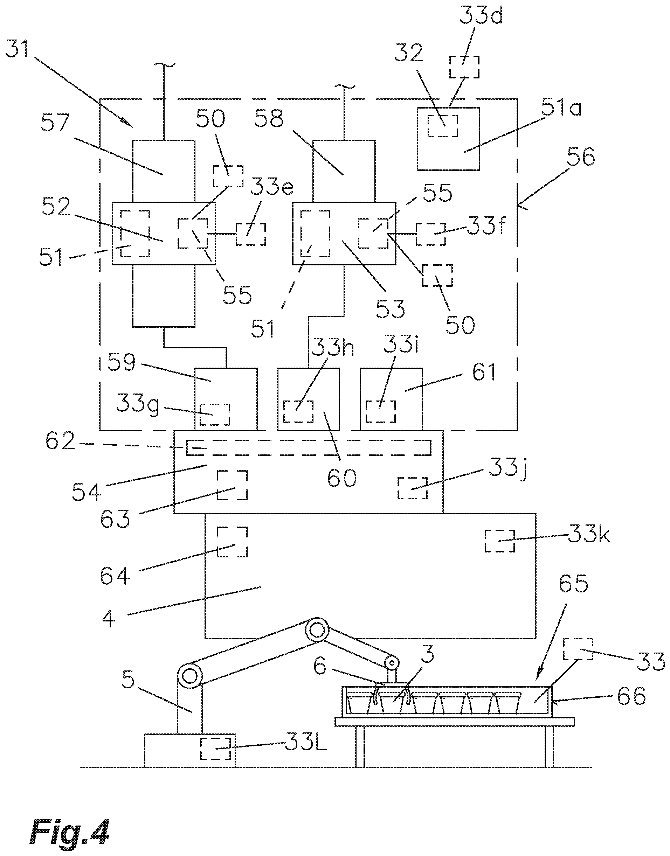

Weiters ist in Fig. 4 ein weiters Ausführungsbeispiel einer Zusammensetzung einer Kunststoffindustrieanlage 1 gezeigt, wobei bei diesem Ausführungsbeispiel auf jene Geräte 31, die mit einem Materialspeicher 51, wie beispielsweise Trocknungstrichter 52,53, Blender 54, 55, Spritzgießmaschine 4, versehen sind, näher eingegangen wird, insbesondere im Detail auf die Materialverwaltung.

In diesen Geräten 31 ist eine spezielle Materialsteuerung 56 (auch FiFo genannt) integriert, die für die Verwaltung des Materials, insbesondere Granulats 9, in dessen Materialspeicher 51 zuständig ist und von der der Materialbeitrag 50 für die Integration in den Qualitätsbeitrag 33 (33a bis 33L) erstellt wird. Dabei wird von der Materialsteuerung 56 im Materialbeitrag 50 eine Materialunit-ID und die Größe dieser Materialunit, sowie ein Qualitätswert, der insbesondere aussagt, ob sich während des Prozesses alle Parameter im gültigen Bereich befunden haben und durch ein OK oder nicht OK definiert wird, gespeichert. Bei dem Materialspeicher 51 wird das Material vorzugsweise von oben befüllt und von unten entnommen, sodass sich darin sozusagen die verschiedensten Schichten, da ja Material zu den verschiedensten Zeitpunkten hineingefüllt wird, bilden können. Speziell, wenn der Materialspeicher 51 oder auch Materialtrichter mit einem Trockner 51a verbunden ist, wie schematisch dargestellt, sodass im Materialspeicher 51 je nach Verweilzeit des Granulates 9 dieses unterschiedlich trocken ist, ist es von Bedeutung, dass der Trocknungsgrad oder die Verweilzeit dieser Schichten in den Materialbeitrag mit aufgenommen wird.

Im Ausführungsbeispiel sind die Geräte 31 für die Förderung des Materials, insbesondere des Granulates 9 in einer Zelle 55, die strich-punktiert umrandet dargestellt ist, zusammengefasst. Entnimmt dabei ein Loader 57,58, der beispielsweise auf dem Trocknungstrichter 52,53 sitzt, ein Material, insbesondere Granulat 9, so wird dies vom Qualitätssystem "COQ", insbesondere der "Chain of Quality-Software", erkannt und übergibt dem Trocknungstrichter 52, 53 einen neuen Materialbeitrag 50, welcher aus der Materialunit-ID und der Größe der Materialunit besteht. Somit ist der Materialbeitrag 50 zumindest durch die Materialunit-ID unverwechselbar und eindeutig zuordenbar, wobei die Größe von dem eingesetzten Loader 57,58 und zusätzlich von einem Korrekturwert, welcher durch Erkennen des tatsächlichen Materialverbrauches am Blender 54 errechnet wurde, gebildet wird.

Der Trocknungstrichter 52,53, insbesondere dessen Materialsteuerung 55, speichert diese Materialunit-ID mit der zugehörigen Größe, beispielsweise 10. Fördert beispielsweise nun das Fördergerät, insbesondere der Loader 57, so fragt COQ beim Trocknungstrichter 52 die Liste Materialunit-IDs für die Größe des Loaders 57 ab. Dies bedeutet, wenn die nächste Materialunit im Trocknungstrichter 52 die Größe 10 hat und das COQ möchte die Größe 7, so bleibt der Rest der Materialunit im Trocknungstrichter 52 erhalten, hat aber nur mehr die Größe 3. Bei der nächsten Abfrage an den Trocknungstrichter 52 mit der Größe 7 liefert dieser nun zwei Materialunit-IDs und die nächste gespeicherte Materialunit hat eine Größe von 6, da der vorhandene Rest, nämlich die Größe 3 mit der neuen Größe 4 entnommen wird, um 7 Einheiten zu liefern, wodurch somit wiederum ein Rest von der Größe 6 vorhanden bleibt. Sollte z.B. eine Größe von 25 abgefragt bzw. gefördert werden, werden zwei Materialunits aus dem Trocknungstrichter 52 gefördert und die unterste hat eine Größe von 5, da eine Materialunit mit der Größe 10 und eine weitere Materialunit ebenfalls mit der Größe 10 und anschließend nur mehr eine Materialunit mit der Größe 5 gefördert wurde, sodass der Rest die Größe 5 aufweist.

Der Trocknungstrichter 52 liefert über den Loader 59 Material an den Blender 54 und übergibt dem Blender den neuen Qualitätsbeitrag 33g, in dem praktisch die vorher beteiligten Geräte 31 bzw. Stationen und deren Gerätebeiträge 32 und/oder Materialbeiträge 50, also auch dieser vom Trocknungstrichter 52 enthalten sind. Hierbei ist es auch möglich, dass der Materialbeitrag 50 extra versendet wird, sodass der Blender 54 die wesentlichen Daten direkt bekommt und nicht erst aus dem Qualitätsbeitrag 33g entnehmen muss, falls der Blender 54 Informationen bzw. Daten benötigt. Der Blender 54 weist dabei wiederum einen eigenen Materialtrichter 62 auf, der von den Loadern 59 bis 60 mit Material befüllt wird. Dabei ist im Blender 54 wiederum eine Materialsteuerung 63 vorhanden, die die Verwaltung des Materials übernimmt, sodass der Blender 54 die Materialentnahme aus seinem Materialspeicher 62 selbstständig bei der Erzeugung eines sogenannten Batchs erstellt und speichert. Ein Batch ist eine Zusammensetzung unterschiedlicher Materialien bzw. Granulate 9, sodass die Zusammensetzung der MaterialUnit-IDs und die Größe des Batchs vom Blender 54 gespeichert werden und gleichzeitig ein Materialbeitrag 50 erstellt wird, der in seinem Qualitätsbeitrag 33k ergänzt wird.

Anschließend wird der zusammengestellte Batch vom Blender 54 an die Spritzgießmaschine 4 übergeben, sodass mit der Übergabe des Qualitätsbeitrages 33k an die Spritzgießmaschine 4 von der COQ somit eine neue MaterialUnit-ID übergeben wurde. Da in der Spritzgiessmaschine 4 wiederum Material verarbeitet, insbesondere plastifiziert wird und daraus das Spritzgießteil 3 erzeugt wird, weist auch die Spritzgießmaschine 4 eine derartige Materialsteuerung 64 (FiFo) auf. Sobald die Spritzgießmaschine 4 der Materialsteuerung 64 die Info liefert dass ein neuer Spritzgießteil 3 produziert wurde, frägt das COQ wieder den ersten Eintrag der Maschinensteuerung 64 mit der Schussgröße ab und speichert diesen wieder unter einer neuen MaterialUnit-ID, insbesondere einem Materialbeitrag 50, mit der Verlinkung auf die von der Spritzgießmaschine 4 gelieferten MaterialUnit-IDs. Zusätzlichen zu den COQ Daten von der Spritzgießmaschine 4 können in diesem Fall auch die COQ Daten, d.h. die Qualitätsbeiträge, insbesondere die Gerätebeiträge, von weiteren Geräten 31, wie beispielsweise TCUs, Flowcons, abgespeichert werden.

Erkennt das COQ, dass das Material im Blender 54 oder in der Spritzgießmaschine 4 immer mehr wird, weil beispielsweise ständig mehr Material hinein gefördert wird, als entnommen wird, soll das COQ automatisch die Größen der Fördergeräte, insbesondere der Loader 56 bis 61, anpassen, damit der theoretische Materialfluss automatisch an den tatsächlichen Materialfluss angepasst wird. Dasselbe gilt, wenn festgestellt wird, dass mehr Material entnommen wird, als eigentlich hinein gefördert wurde. Dadurch wird gleichzeitig zum Erstellen des Qualitätsbeitrages 33 von der COQ auch eine Überwachung bzw. Steuerung für die Kunststoffindustrieanlage 1 durchgeführt.

Somit kann es in der COQ für jeden gefundenen Gerätetyp eine Tabelle mit den für die COQ interessanten Werte geben, wobei die entsprechenden Werte im Qualtitätsbeitrag 33 eingetragen sind oder die gesamten Listen im Qualitätsbeitrag 33 enthalten sind. In dem Ausführungsbeispiel der Fig. 4 wird der Qualitätsbeitrag 33 nicht auf nur einen Spritzgießteil 3 bezogen, sondern auf eine Charge 65, wie schematisch durch die Verpackung vieler Spritzgießteile 3 in einer Kiste 66, dargestellt ist, wobei im Qualitätsbeitrag 33 jedoch zu entnehmen ist, welche Spritzgießteile 4 darin verpackt sind

Wie bereits beschrieben, können die Produktionsmittel bzw. Geräte 31 in einer Arbeitszelle 2 organisiert sein, bei der Materialförderung und Trocknung erfolgt dies vorzugsweise derart, dass die Materialförderung mehreren/allen Arbeitszellen 2 46,47 zuarbeitet, wobei vor allem auch die Qualität während der Aufbereitung des Materials bzw. Granulats 9 gesammelt werden muss und eine Zuordnung hergestellt wird, welche Materialbeiträge mit welchen Gerätebeiträgen 32 vorzugsweise zeitlich zusammen gehören.

Als sehr vorteilhaft hat sich gezeigt, dass der Roboter als Gerätebeitrag beispielsweise die Kisten-ID liefert, in der das Spritzgießteil 3 abgelegt wird. Dabei ist es auch möglich, dass die Teile-ID bei Zusammenarbeit mit einem Printer, der die ID-Nummer auf das Teil, insbesondere Spritzgießteil 3 druckt, geliefert wird bzw. ausgedruckt werden kann. Der Roboter 5 könnte dazu auch die Position, wo in die Kiste der Teil bzw. Spritzgießteil 3 gestapelt wurde, liefern oder aber auch die Zeit, wann das Teil beim Transportband 8 herausgekommen ist oder herausgenommen wurde. Diese Daten könnten als Gerätebeitrag 32 der zu speichernden Teilequalität bzw. in dem Qualitätsbeitrag 33 einprägt werden.

Man kann also sagen, dass während eines Produktionszyklus bzw. Produktionslaufes, also von der Entnahme des Granulats aus einem Vorratsspeicher und/oder eines Silos bis zum Erzeugen des Spritzgießteils 3 und der anschließenden Entnahme und Ablage des erzeugten Spritzgießteils 3 aus der Verarbeitungsmaschine von dem Roboter 5 und einer eventuellen nachfolgenden Qualitätskontrolle über ein Kamerasystem 15, mit der von Station 31 zu Station 31 in granularer, plastifizierter oder fester Form weitergebenen Kunststoffmasse auch Qualitätsinformation in Form eines oder mehrerer Qualitätsbeiträge 33, die sich auf unterschiedliche Materialmengen beziehen können, weitergegeben wird , wobei diese Qualitätsbeiträge 33 von jedem beteiligten Gerät 31 oder Station 31 durch Gerätebeiträge 32 und/oder Materialbeiträge 50 weiter ergänzt oder bestehende Daten, insbesondere Materialmengen, verändert werden, d.h., dass ein Verfahren zur Qualitätskontrolle und/oder Nachverfolgung eines in einem Produktionszyklus mit vorzugsweise zumindest einer Verarbeitungsmaschine 4 der kunststoffverarbeitenden Industrie hergestellten Spritzgießteils 3, sowie vor- und/oder nachgeschalteten Produktionsmitteln oder Geräten 31 oder Stationen 31, beispielsweise Vorratsspeichern 22, 23, 44, 45 oder Silos 41 für Granulat 9, Granulat-Trocknern 29,43,44, Materialverteilern 40, Dosiergeräten 11, Temperiergeräten 13, Durchflussreglern 14, Robotern 5 und/oder Kamerasystemen 15 und/oder Messvorrichtungen für die Qualitätskontrolle, die vorzugsweise über ein Netzwerk 49 miteinander verbunden sind, wobei für jedes Spritzgießteil 3 oder Charge zumindest ein Qualitätsbeitrag 33 erstellt wird, wobei während des Produktionszyklus jedes Gerät 31 inklusive der Verarbeitungsmaschine 4 in fortschreitender Reihenfolge in der Produktionskette bis zum fertigen Spritzgießteil 3 einen Qualitätsbeitrag 33 erstellt, der aus einem für dieses Gerät 31 oder Station 31 abgestimmten Gerätebeitrag 32 und/oder Materialbeitrag 50 besteht und in der Produktionskette zum nächsten Gerät 31 bzw. Station 31 weiter gereicht und dort jeweils um den entsprechenden Qualitätsbeitrag ergänzt wird oder von einer Sammelstation 48, vorzugsweise einer Hardware und Software, (CoQ - "Chain of Quality"), die Gerätebeiträge 32 und Materialbeitrage 50 der Geräte 31 bzw. Stationen 31 abgefragt werden oder an die Sammelstation 48 gesendet werden und zu zumindest einem Qualitätsbeitrag 33 zusammen gefügt werden.

Der vollständigkeitshalber wird erwähnt, dass beispielsweise aus einem Materialbeitrag 50 eine Vielzahl weiterer Materialbeiträge 50 von den Geräten 31 oder Stationen 31 erzeugt werden kann, wie dies beispielsweise für die Lagerung bzw. Trocknung des Materials, insbesondere Granulats 9 der Fall ist. Dabei werden beispielsweise in einen Silo 41 oder Vorratsspeicher 22,23,44,45 eine größere Menge von Granulat 9 gelagert, deren Parameter, wie die Art des Materials, das Gesamtvolumen, die Chargennummer, das Befüll-Datum, usw., in einem Materialbeitrag 50 gespeichert werden, wobei anschließend von den verschiedensten Fördergeräten 31 nur eine geringe Menge an Granulat 9 entnommen wird, was in einen neuen Materialbeitrag 50 oder in einem ergänzten bzw. abgeänderten Materialbeitrag 50 festgehalten und zum Qualitätsbeitrag 33 ergänzt wird. Dabei ist es wesentlich, dass der Materialbeitrag 50 durch speziell definierte Daten zum Material, insbesondere die geschätzte oder gemessene Menge des geförderten und/oder verarbeiteten Materials, gebildet wird.

Der Ordnung halber wird darauf hingewiesen, dass die Erfindung nicht auf die dargestellten Ausführungsvarianten beschränkt ist, sondern auch weitere Ausbildungen beinhalten können.

## Patentansprüche

1. Verfahren zur Qualitätskontrolle und/oder Nachverfolgung eines in einem Produktionszyklus mit zumindest einer Verarbeitungsmaschine (4) der kunststoffverarbeitenden Industrie hergestellten Spritzgiessteils (3), sowie vor- und/oder nachgeschalteten Produktionsmitteln oder Geräten (31) oder Stationen (31), wie Vorratsspeichern (22, 23, 44, 45) oder Silos (41) für ein Material, insbesondere ein Granulat (9), Granulat-Trocknern (29,43,52,53), Materialverteilern (40), Fördergeräten (19,25,26,31), Dosiergeräten (11), Temperiergeräten (13), Durchflussreglern (14), Robotern (5) und/oder Kamerasystemen (15) und/oder Messvorrichtungen für die Qualitätskontrolle, die vorzugsweise über ein Netzwerk (49) miteinander verbunden sind, **dadurch gekennzeichnet, dass** jedem einzelnen Spritzgiessteil (3) oder einer bestimmten Anzahl, insbesondere einer Charge (65), von Spritzgießteilen (3) ein Qualitätsbeitrag (33) zugewiesen wird, der sich aus mehreren Qualitätsbeiträgen (33a bis 33L) vom Beginn der ersten Granulatförderung bis zum fertigen Produkt bzw. Spritzgiessteil zusammensetzt, indem jedes Gerät (31) oder Station (31) in der Produktionskette seinen eigenen Qualitätsbeitrag (33a bis 33L), der aus einem Gerätebeitrag (32) und/oder Materialbeitrag (50) besteht, ermittelt bzw. erzeugt und um den oder die übermittelten Qualitätsbeiträge (33a bis 33L) der jeweiligen Vorgänger-Geräte (31) bzw. Vorgänger-Stationen (31) erweitert und diesen als neuen Qualitätsbeitrag (33a bis 33L) an das Nachfolge-Gerät (31) oder Nachfolge-Station (31) weiterleitet.

2. Verfahren nach Anspruch 1, **dadurch gekennzeichnet, dass** in den Geräten (31) oder Stationen (31) für den Materialbeitrag (50) eine Materialsteuerung (51,63, 64) für die Verwaltung des Materials eingesetzt wird.

3. Verfahren nach Anspruch 1 oder 2, **dadurch gekennzeichnet, dass** der Gerätebeitrag (32) eines Gerätes (31) durch speziell definierte Daten dieses Gerätes (31) und vorzugsweise mit einem Zeitstempel gebildet wird.

4. Verfahren nach einem der vorhergehenden Ansprüche, **dadurch gekennzeichnet, dass** der Materialbeitrag (50) durch speziell definierte Daten zum Material, insbesondere die geschätzte oder gemessene Menge des geförderten und/oder verarbeiteten Materials, gebildet wird.

5. Verfahren nach einem der vorhergehenden Ansprüche, **dadurch gekennzeichnet, dass** der Qualitätsbeitrag (33) von vorzugsweise allen Geräten (31) oder Stationen (31) zur Erzeugung des Spritzgießteils (3) in einen zeitlichen Zusammenhang gestellt wird.

6. Verfahren nach einem der vorhergehenden Ansprüche, **dadurch gekennzeichnet, dass** bei der Erstellung des zeitlichen Zusammenhangs im Qualitätsbeitrag (33) die Verzögerungszeiten zur Aufbereitung oder Verarbeitung des Materials in den einzelnen Geräten (31) bzw. Stationen (31) berücksichtigt werden, wobei die Verzögerungszeiten vorzugsweise von den Geräten selbst ermittelt werden, alternativ durch einen Testlauf oder manuell eingestellt und hinterlegt werden.

7. Verfahren nach einem der vorhergehenden Ansprüche, **dadurch gekennzeichnet, dass** das aus einem Vorratsspeicher (22,23,44,45) bzw. Silo (41) oder einem Dosiergerät (11) geförderte Material in Materialbeiträge (50), vorzugsweise in der Größe des Fördervolumens des verwendeten Fördergerätes, unterteilt wird, und die Materialbeiträge (50) mit ihrer Qualitätsinformation in der Datenbank gespeichert werden oder auch von Gerät zu Gerät weitergegeben werden.

8. Verfahren nach Anspruch 6, **dadurch gekennzeichnet, dass** die Materialbeiträge (50) gerätetypbezogen in Tabellen in einer oder mehreren Datenbanken gespeichert wird und über IDs (Identifikationscodes) in Beziehung gesetzt wird.

9. Verfahren nach Anspruch 6 oder 7, **dadurch gekennzeichnet, dass** die Materialbeiträge (50) je nach Verarbeitungsprozess in weitere Materialbeiträge (50) aufgespalten werden oder mehrere Materialbeiträge unter einem neuen Materialbeitrag zusammengefasst werden.

10. Verfahren nach Anspruch 6 oder 7, **dadurch gekennzeichnet, dass** der Qualitätsbeitrag der Materialbeiträge (50) durch jedes an der Verarbeitung der Materialbeiträge (50) beteiligte Gerät (31) weiter ergänzt wird.

11. Verfahren nach einem der vorhergehenden Ansprüche, **dadurch gekennzeichnet, dass** eine in einem Fördergerät geförderte geschätzte Fördermenge des Materials oder Materialbeitrages (50) beim Durchlauf von Geräten (31) mit Dosierfunktionalität oder Mengenmesseinrichtungen wie beispielsweise gravimetrisches Dosiergerät oder Spritzgießmaschine (4) nachträglich korrigiert werden kann, indem eine oder mehrere verteilte Datenbank/Listen mit hinterlegten Fördermengen angepasst wird oder durch einen Regelungsalgorithmus angepasst wird.

12. Verfahren nach einem der vorhergehenden Ansprüche, **dadurch gekennzeichnet, dass** die geschätzten und in den Materialbeiträgen (50) hinterlegten Fördermengen bzw. Förderparameter derart berechnet werden, dass diese die, an jenen Geräten (31) mit eindeutig messbaren Fördermengen, wie beispielsweise der Spritzgießmaschine (4), den gravimetrischen Dosiergeräten, usw., gemessenen Fördermengen ergeben.

13. Verfahren nach einem der vorhergehenden Ansprüche, **dadurch gekennzeichnet, dass** die Daten des Gerätebeitrages (32) von dem Roboter (5) vorzugsweise aus der Kisten-ID und/oder aus der Position in der die Spritzgiessteile (3) abgelegt bzw. gestapelt werden und/oder aus dem Zeitpunkt zu dem das Spritzgiessteil (3) vom Transportbandes (8) genommen wird, bestehen.

14. Verfahren nach einem der vorhergehenden Ansprüche, **dadurch gekennzeichnet, dass** ein Transportband (8), beispielsweise verwendet als Kühlstrecke, mit seinen Verzögerungszeiten als Station/Gerät (31) verarbeitet wird, sodass die Qualität des Gerätebeitrages (32) auch jenes Teils (3), das sich gerade am Ende des Transportbandes (8) befindet, erfasst wird.

15. Verfahren nach einem der vorhergehenden Ansprüche, **dadurch gekennzeichnet, dass** von jedem Gerät (31) bzw. Station (31) die genaue Zeit der Verarbeitung des Materialbeitrages (50) jedes beteiligten Prozesses erfasst und gespeichert wird.

## Claims

1. Method for quality control and/or tracking of an injection-molded part (3) produced in a production cycle with at least one processing machine (4) of the plastics-processing industry, as well as upstream and/or downstream production resources or devices (31) or stations (31), such as reservoirs (22, 23, 44, 45) or hoppers (41) for a material, in particular granules (9), granule dryers (29, 43, 52, 53), material distributors (40), conveyors (19, 25, 26, 31), metering devices (11), temperature control devices (13), flow controllers (14), robots (5) and/or camera systems (15) and/or measuring devices for quality control, which are preferably connected to one another via a network (49), **characterized in that** each individual injection-molded part (3) or a specific number, in particular a batch (65), of injection-molded parts (3) is assigned a quality contribution (33) which consists of a plurality of quality contributions (33a to 33L) from the start of the first granule feeding to the finished product or injection-molded part, respectively, whereby each device (31) or station (31), respectively, in the production chain determines or generates, respectively, its own quality contribution (33a to 33L), which consists of a device contribution (32) and/or material contribution (50), and extends it by the transmitted quality contribution or contributions (33a to 33L) of the respective upstream device (31) or upstream stations (31), respectively, and forwards it as a new quality contribution (33a to 33L) to the downstream device (31) or downstream station (31).

2. Method according to claim 1, **characterized in that** in the devices (31) or stations (31) for the material contribution (50) a material controller (51, 63, 64) is used for management of the material.

3. Method according to claim 1 or 2, **characterized in that** the device contribution (32) of a device (31) is formed by specifically defined data of this device (31) and preferably with a time stamp.

4. Method according to any one of the preceding claims, **characterized in that** the material contribution (50) is formed by specifically defined data on the material, in particular the estimated or measured quantity of the conveyed and/or processed material.

5. Method according to any one of the preceding claims, **characterized in that** the quality contribution (33) of preferably all devices (31) or stations (31) for producing the injection-molded part (3) is placed in a temporal context.

6. Method according to any one of the preceding claims, **characterized in that** the delay times for preparing or processing the material in the individual devices (31) or stations (31), respectively, are taken into account when creating the temporal relationship in the quality contribution (33), wherein the delay times are preferably determined by the devices themselves, alternatively set by means of a test run or manually and stored.

7. Method according to any one of the preceding claims, **characterized in that** the material conveyed from a reservoir (22,23,44,45) orhopper (41), respectively, or a metering device (11) is split into material contributions (50), preferably in the size of the conveying volume of the conveying device used, and the material contributions (50) with their quality information are stored in the database or are passed on from device to device.

8. Method according to claim 6, **characterized in that** the material contributions (50) are stored in tables in one or several databases in relation to device type and related via IDs (identification codes).

9. Method according to claim 6 or 7, **characterized in that** the material contributions (50) are split into further material contributions (50) depending on the processing process, or several material contributions are combined to form a new material contribution.

10. Method according to claim 6 or 7, **characterized in that** the quality contribution of the material contributions (50) is further supplemented by each device (31) involved in the processing of the material contributions (50).

11. Method according to any one of the preceding claims, **characterized in that** an estimated delivery quantity of the material or material contribution (50) conveyed in a conveying device can be subsequently corrected when passing through devices (31) with metering functionality or quantity measuring devices, such as a gravimetric metering device or injection-molding machine (4), by adjustment of one or several distributed databases/lists with stored delivery quantities or by adjustment by a control algorithm.

12. Method according to any one of the preceding claims, **characterized in that** the estimated delivery quantities or delivery parameters, respectively, stored in the material contributions (50) are calculated in such a way that they result in the delivery quantities measured at those devices (31) with unambiguously measurable delivery quantities, such as, for example, the injection-molding machine (4), the gravimetric metering devices, etc.

13. Method according to any one of the preceding claims, **characterized in that** the data of the device contribution (32) from the robot (5) preferably consist of the box ID and/or of the position in which the injection-molded parts (3) are deposited or stacked, respectively, and/or of the time at which the injection-molded part (3) is taken from the conveyor belt (8).

14. Method according to any one of the preceding claims, **characterized in that** a conveyor belt (8), for example used as a cooling line, is processed with its delay times as a station/device (31), so that the quality of the device contribution (32) is also detected of that part (3) which is just at the end of the conveyor belt (8).

15. Method according to any one of the preceding claims, **characterized in that** the exact time of processing of the material contribution (50) of each process involved is detected and stored by each device (31) or station (31), respectively.

## Revendications

1. Procédé pour le contrôle de qualité et/ou le suivi d'une pièce moulée par injection (3) fabriquée au cours d'un cycle de production avec au moins une machine de traitement (4) de l'industrie de traitement des matières plastiques, ainsi que des moyens de production ou des appareils (31) ou des stations (31) installés en amont ou en aval, tels que des réservoirs de stockage (22, 23, 44, 45) ou des silos (41) pour un matériau, en particulier des granulés (9), des sécheurs de granulés (29, 43, 52, 53), des distributeurs de matériaux (40), des convoyeurs (19, 25, 26, 31), des doseurs (11), des thermorégulateurs (13), des régulateurs de débit (14), des robots (5) et/ou des systèmes de caméras (15) et/ou des dispositifs de mesure pour le contrôle de la qualité, qui sont, de préférence, connectés entre eux par le biais d'un réseau (49), **caractérisé en ce qu'une** fiche qualité (33) est attribuée à chaque pièce moulée par injection (3) ou à un certain nombre, en particulier un lot (65) de pièces moulées par injection (3), lequel est constitué de plusieurs fiches qualité (33a à 33L) du début du premier transport de granulés jusqu'au produit fini ou à la pièce moulée par injection, dans lequel chaque appareil (31) ou station (31) dans la chaîne de production détermine ou produit sa propre fiche qualité (33a à 33L), constituée d'une fiche appareil (32) et/ou d'une fiche matériau (50) et étendue par le ou les fiches qualité (33a à 33L) des appareils (31) ou des stations (31) en amont correspondants et la transfère en tant que nouvelle fiche qualité (33a à 33L) à l'appareil (31) en aval ou à la station (31) en aval.

2. Procédé selon la revendication 1, **caractérisé en ce qu'**une commande de matériau (51, 63, 64) est employée pour la gestion des matériaux dans les appareils (31) ou les stations (31) pour la fiche matériau (50).

3. Procédé selon la revendication 1 ou 2, **caractérisé en ce que** la fiche appareil (32) d'un appareil (31) est constituée de données spécialement définies de cet appareil (31) et, de préférence, un horodatage.

4. Procédé selon l'une des revendications précédentes, **caractérisé en ce que** la fiche matériau (50) est constituée de données spécialement définies concernant le matériau, notamment la quantité estimée ou mesurée de matériau transporté et/ou traité.

5. Procédé selon l'une des revendications précédente, **caractérisé en ce que** la fiche qualité (33), de préférence de tous les appareils (31) ou de toutes les stations (31) est placée dans un lien temporel en vue de la fabrication de la pièce moulée par injection (3).

6. Procédé selon l'une des revendications précédentes, **caractérisé en ce que** les temps de latence pour la préparation ou le traitement du matériau dans les différents appareils (31) ou stations (31) sont pris en compte lors de la création du lien temporel dans la fiche qualité (33), les temps de latence étant de préférence déterminés par les appareils eux-mêmes, alternativement par une marche d'essai ou réglés et enregistrés manuellement.

7. Procédé selon l'une des revendications précédente, **caractérisé en ce que** le matériau transporté est réparti dans les fiches matériau (50) à partir d'un réservoir de stockage (22,23, 44, 45), respectivement d'un silo (41) ou d'un doseur (11), de préférence de la taille du volume de transport du convoyeur employé, et les fiches matériau (50) étant enregistrées dans la banque de données avec leurs informations de qualité ou encore transférées d'un appareil à l'autre.

8. Procédé selon la revendication 6, **caractérisé en ce que** les fiches matériau (50) sont enregistrées dans une ou plusieurs banques de données sous forme de tableaux en fonction du type d'appareil et mises en relation par le biais d'ID (codes d'identification).

9. Procédé selon la revendication 6 ou 7, **caractérisé en ce que** les fiches qualité (50) sont divisées en d'autres fiches matériau (50) en fonction du processus de traitement ou **en ce que** plusieurs fiches matériau sont regroupées en une nouvelle fiche matériau.

10. Procédé selon la revendication 6 ou 7, **caractérisé en ce que** la fiche qualité des fiches matériau (50) est complétée par chaque appareil (31) participant au traitement de la fiche matériau (50).

11. Procédé selon l'une des revendications précédentes, **caractérisé en ce qu'**une quantité estimée de matériau transportée dans un convoyeur ou la fiche matériau (50) au passage des appareils (31) avec une fonction de dosage ou de dispositifs de mesure du volume, comme par exemple un doseur gravimétrique ou une machine de moulage par injection (4) peut être corrigée ultérieurement, en adaptant une ou plusieurs bases de données/listes distribuées de quantités de transport enregistrées ou en les adaptant au moyen d'un algorithme de régulation.

12. Procédé selon l'une des revendications précédentes, **caractérisé en ce que** les quantités de transport estimées et enregistrées dans les fiches matériau (50) ou les paramètres de transport sont calculés de telle sorte qu'ils donnent les quantités de transport mesurées sur les appareils (31) dont les quantités sont clairement mesurables, comme par exemple la machine de moulage par injection (4), les doseurs gravimétriques, etc.

13. Procédé selon l'une des revendications précédentes, **caractérisé en ce que** les données de la fiche appareil (32) du robot (5) sont constituées de préférence à partir de l'ID de la caisse et/ou à partir de la position dans laquelle la pièce moulée par injection (3) est déposée ou empilée et/ou à partir du moment où la pièce moulée par injection (3) est retirée de la bande transporteuse (8).

14. Procédé selon l'une des revendications précédentes, **caractérisé en ce qu'**une bande transporteuse (8), utilisée par exemple à titre de ligne de refroidissement, est traitée avec ses temps de latence comme station/appareil (31), de telle sorte que la qualité de la fiche appareil (32) est également détectée pour cette pièce (3) qui se trouve justement à la fin de la bande transporteuse (8).

15. Procédé selon l'une des revendications précédentes, **caractérisé en ce que** l'heure exacte de traitement de la fiche matériau (50) de chaque processus impliqué est saisie et enregistrée par chaque appareil (31) ou station (31).
